# EUROPEAN PATENT SPECIFICATION

(11) **EP 1 249 403 B1**
(45) Date of publication and mention of the grant of the patent: **15.04.2009**
(21) Application number: 02252568.7
(22) Date of filing: 10.04.2002
(51) Int. Cl.: B65D 27/12, B65D 27/08, B42F 7/02

(54) **Document wallet**
Dokumentenhülle
Enveloppe pour documents

(30) Priority: 11.04.2001 GB 0109140
(43) Date of publication of application: 16.10.2002
(73) Proprietor: Snopake International Limited, London W1U 3LL (GB)
(72) Inventor: Stern, Ronald J.H., London, NW3 6XR (GB)
(74) Representative: Feakins, Graham Allan

(56) References cited:
- DE-B- 1 258 719
- GB-A- 852 942
- US-A- 3 158 313

## Description

Document wallets, holders, files or folders are well known for storing and protecting documents. Typically, such products, referred to herein as document wallets, are formed from cardboard or plastics material. They include a front and rear panel, usually rectangular in shape, that are usually connected to each other around three edges, leaving the other edge unconnected to allow access to the interior of the wallet. A flap is usually connected to the rear panel, and is foldable over the open edge of the wallet onto the front panel, thereby closing the opening and retaining documents within the wallet. It is known for a fastener to be provided to allow the flap to be fastened to the front panel.

It is also known to provide a pocket on the front panel or on the flap. The pocket may be used for a label or tag, or may be used to hold a CD-ROM, a floppy diskette or a pen. Such pockets are formed from an additional piece of the material from which the wallet is formed. The additional piece of material is usually attached to the wallet around some of its edges, leaving at least one edge unconnected to allow access to the interior of the pocket. Whilst the pockets are usually provided on the outside of the wallet so that they may be accessed when the wallet is open or closed, in some cases the pocket is located under the closed flap of the wallet, helping to retain the contents of the pocket within the pocket when the wallet is closed. Examples of wallets are disclosed in GB 852 942, US 3 158 313 and DE 1 258 719.

According to a first aspect of the present invention, a document wallet comprises a front panel and a rear panel joined to each other along some of the edges of the panels and leaving at least a portion of one of the edges unjoined to allow access to the interior of the wallet, a flap joined to the rear panel, the flap being foldable over the opening to the interior of the wallet to close the opening, and a pocket formed as an extension to the front panel and arranged such that the pocket is located under the flap when the wallet is closed, the wallet being formed from a transparent or translucent material.

According to a second aspect of the present invention, a blank for forming a document wallet in accordance with the first aspect of the present invention comprises a front panel, a rear panel, a flap and an extension for the formation of a pocket.

According to a third aspect of the present invention, a method of forming a document wallet comprises the steps of:
providing a blank formed from a transparent or translucent material comprising a front panel, a rear panel, a flap and a pocket portion formed as an extension to the front panel;
folding the pocket extension portion over and joining this along an edge to form a pocket;
folding the front panel with respect to the rear panel, and joining these to each other along an edge portion to form the wallet.

The most suitable order of the steps of folding and joining may be selected.

The advantage of the present invention is that the wallet may be formed, with a pocket, from a single piece of material. This makes the assembly of the wallet easier than where the pocket is formed of a separate piece, in which case the separate piece to form the pocket must be separately cut from the blank, positioned in the correct position on the blank from which the wallet is to be formed, and joined to the blank, before the wallet is then formed from the blank. With the present invention, the steps of providing and positioning an additional piece of material may be avoided. It is preferred that the extension is therefore contiguous with the remainder of the blank.

Preferably, the blank is formed from a plastics material, such as polypropylene, polythene or PVC. In this case, it is preferred that the step of joining the pocket and/or the front and rear panels is a welding step. Alternatively, the joining step may be an adhering or other suitable step.

The pocket is located in such a position that this is contained within the wallet when the wallet is closed, but may be accessed when the wallet is opened. In this way, the contents of the pocket and the pocket itself are protected when the wallet is closed. This helps prevent the contents of the pocket becoming lost or damaged, and reduces the risk of the pocket being damaged, for example from being torn.

An example of a wallet according to the present invention, a blank, and of the method of the present application will be described with respect to the accompanying drawings, in which:
Figure 1 shows a view of a blank from which the document wallet is formed; and,
Figure 2 shows an assembled wallet.

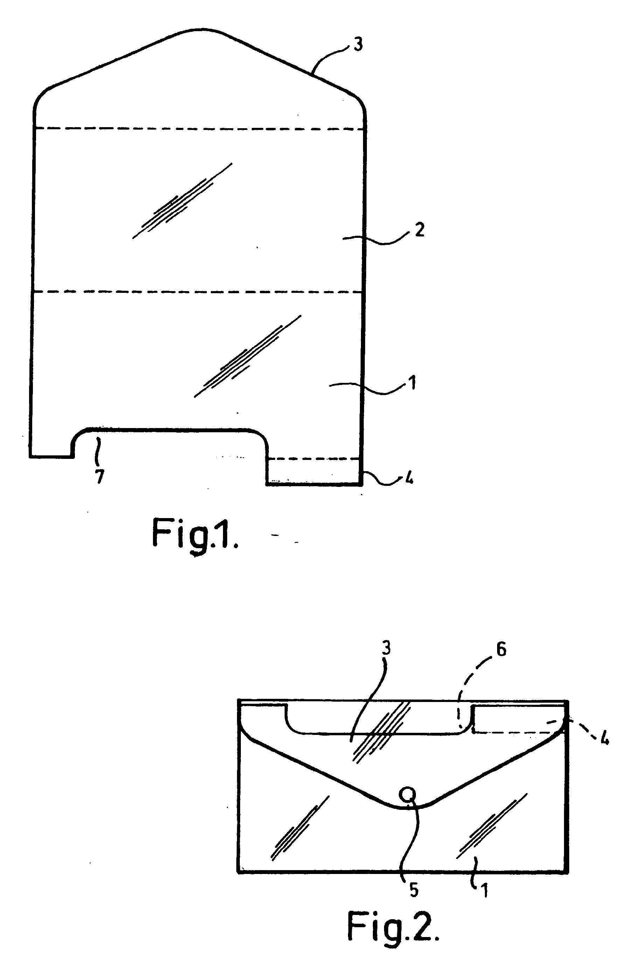

Figures 1 and 2 show an example of a document wallet according to the present invention. Figure 1 shows a blank from which the wallet is formed, and Figure 2 shows the wallet itself.

As shown in Figure 1, the wallet is formed from a blank of a transparent or translucent polypropylene material. The blank may be formed of other transparent or translucent materials, or from non-transparent materials. The blank includes a generally rectangular rear panel 2 and a similar front panel 1. An extension on the rear panel 2 forms a flap 3. The front panel 1 also has a small extension to form the pocket 4, and a cut out portion 7 to assist access to the wallet.

To assemble the wallet, the extension 4 is folded in half along the line indicated in Figure 1, and the free end of the extension 4 is joined, for example by welding, sewing or by an adhesive, to the front panel 1. The front and rear panels are then folded onto each other, and joined, for example by welding, along their side edges, forming a main pocket for receiving documents. The join also closes one side of the pocket. The other edge 6 of the pocket is left opened to allow a label to be inserted into and removed from the pocket. As shown in Figure 2, the flap may be folded over the top of the open edge of the wallet, and optionally secured to the front panel 1 of the wallet by a suitable fastener, such as a press-stud 5, using a hook-and-loop fastener, or by a string tie.

As can be seen from Figure 2, when the wallet is closed, the pocket 4 is within the closed wallet. This acts to protect the pocket 4, and helps to ensure that a label contained within the pocket 4 is retained within the pocket 4. As the material from which the wallet is formed is transparent or translucent, the label in the pocket 4 may be viewed when the wallet is closed. When it is desired to remove or replace the label in the pocket 4, the wallet can be opened by lifting the flap 3, and this will allow access to the opening 6 to the pocket 4.

It will be appreciated that it may be desirable to access the content of the pocket 4 from outside the wallet, and in this case both ends of the pocket may remain open. By forming the pocket 4 from an extension to the front panel 1 of the wallet blank, a reduced number of joins are required to form the pocket than is the case where the pocket is formed from a separate piece of material. Further, the assembly of the wallet is simplified as the entire wallet is made from a single piece of material.

The pocket 4 could be positioned elsewhere on the wallet, for example of the inside of the back panel 2, the inside of the front panel 1 or the inside of the flap 3, and in all cases this would still be protected and contained within the wallet when the wallet is closed. Rather than forming the pocket from an extension to the blank for the wallet, the pocket may be formed from an additional piece of material.

In an alternative example of the present invention, the blank from which the wallet is formed is not transparent. In this case, it is not possible to see the content of the pocket through the material from which the wallet is formed. In this case, a cut-out portion is provided in both the pocket and in the flap, through which cut-out portions the content of the wallet may be viewed.

In an alternative example, the wallet may be formed from a transparent or translucent material that includes printing on some of the surface, thereby making the wallet opaque in this printed portion. The printing is then omitted in the region of the pocket and the part of the wallet that covers the pocket when the pocket is closed. In this way, the content of the pocket may still be viewed when the wallet is closed.

## Claims

1. A document wallet comprising a front panel (1) and a rear panel (2) joined to each other along some of the edges of the panels and leaving at least a portion of one of the edges unjoined to allow access to the interior of the wallet, a flap (3) joined to the rear panel, the flap being foldable over the opening to the interior of the wallet to close the opening, and a pocket (6) **characterised in that** the pocket is formed as an extension (4) to the front panel, and arranged such that the pocket is located under the flap when the wallet is closed, the wallet being formed from a transparent or translucent material.

2. A document wallet according to Claim 1, formed from a plastics material, preferably of polythene, polypropylene or PVC.

3. A document wallet according to Claim 2, in which the front and rear panels and the pocket are joined by welding.

4. A document wallet according to any one of the preceding claims, in which the surface of the wallet includes printing, other than in the region of the pocket.

5. A blank for forming a document wallet in accordance with any one of the preceding claims, the blank comprising a front panel, a rear panel, a flap joined to the rear panel and an extension to the front panel for the formation of a pocket and being formed from a transparent or translucent material.

6. A method of forming a document wallet comprises the steps of:
providing a blank formed from a transparent or translucent material comprising a front panel, a rear panel, a flap and a pocket portion formed as an extension to the front panel;
folding the pocket extension portion over and joining this along an edge to form a pocket;
folding the front panel with respect to the rear panel, and joining these to each other along an edge portion to form the wallet.

7. A method according to Claim 6, in which the pocket is located at the edge of the wallet, such that the step of joining the front and rear panels also joins one edge of the pocket.

8. A method according to Claim 6 or Claim 7, in which the joins are formed by a weld, an adhesive or by sewing.

9. A method according to any one of Claims 6 to 8, in which the blank includes printing other than in the area of the pocket extension and the part that, in the formed wallet, overlies the pocket.

## Patentansprüche

1. Eine Dokumentenmappe, die eine Vorderplatte (1) und eine Rückplatte (2), die entlang einigen der Kanten der Platten miteinander verbunden sind, wobei mindestens ein Abschnitt von einer der Kanten unverbunden bleibt, um Zugang zum Inneren der Mappe zu ermöglichen, eine Klappe (3), die mit der Rückplatte verbunden ist, wobei die Klappe über die Öffnung zum Inneren der Mappe faltbar ist, um die Öffnung zu schließen, und eine Tasche (6) beinhaltet, **dadurch gekennzeichnet, dass** die Tasche als eine Fortsetzung (4) der Vorderplatte gebildet und so angeordnet ist, dass sich die Tasche unter der Klappe befindet, wenn die Mappe geschlossen ist, wobei die Mappe aus einem durchsichtigen oder lichtdurchlässigen Material gebildet ist.

2. Dokumentenmappe gemäß Anspruch 1, die aus einem Kunststoffmaterial, vorzugsweise aus Polyethylen, Polypropylen oder PVC gebildet ist.

3. Dokumentenmappe gemäß Anspruch 2, wobei die Vorder- und Rückplatte und die Tasche durch Schweißen verbunden sind.

4. Dokumentenmappe gemäß einem der vorhergehenden Ansprüche, wobei die Oberfläche der Mappe außer in dem Bereich der Tasche Bedruckung umfasst.

5. Ein Rohstück zum Bilden einer Dokumentenmappe gemäß einem der vorhergehenden Ansprüche, wobei das Rohstück eine Vorderplatte, eine Rückplatte, eine Klappe, die mit der Rückplatte verbunden ist, und eine Fortsetzung der Vorderplatte für die Bildung einer Tasche beinhaltet und aus einem durchsichtigen oder lichtdurchlässigen Material gebildet ist.

6. Ein Verfahren zum Bilden einer Dokumentenmappe, das die folgenden Schritte beinhaltet:
Bereitstellen eines Rohstücks, das aus einem durchsichtigen oder lichtdurchlässigen Material gebildet ist und eine Vorderplatte, eine Rückplatte, eine Klappe und einen Taschenabschnitt, der als eine Fortsetzung der Vorderplatte gebildet ist, beinhaltet;
Umfalten des Taschenfortsetzungsabschnitts und dessen Verbinden entlang einer Kante, um eine Tasche zu bilden;
Falten der Vorderplatte in Bezug auf die Rückplatte und Verbinden dieser miteinander entlang einem Kantenabschnitt, um die Mappe zu bilden.

7. Verfahren gemäß Anspruch 6, wobei sich die Tasche an der Kante der Mappe befindet, so dass der Schritt des Verbindens der Vorderplatte und der Rückplatte auch eine Kante der Tasche verbindet.

8. Verfahren gemäß Anspruch 6 oder Anspruch 7, wobei die Verbindungen durch eine Schweißnaht, einen Klebstoff oder durch Nähen gebildet werden.

9. Verfahren gemäß einem der Ansprüche 6 bis 8, wobei das Rohstück außer an der Stelle der Taschenfortsetzung und dem Teil, der bei der gebildeten Mappe über der Tasche liegt, eine Bedruckung umfasst.

## Revendications

1. Une enveloppe pour documents comprenant un panneau avant (1) et un panneau arrière (2) joints l'un à l'autre le long de certains des bords des panneaux et laissant au moins une portion de l'un des bords non jointe afin de permettre l'accès à l'intérieur de l'enveloppe, un rabat (3) joint au panneau arrière, le rabat pouvant être plié par-dessus l'ouverture sur l'intérieur de l'enveloppe afin de fermer l'ouverture, et une poche (6) **caractérisée en ce que** la poche est formée comme une extension (4) au panneau avant, et agencée de façon à ce que la poche soit située sous le rabat lorsque l'enveloppe est fermée, l'enveloppe étant formée à partir d'un matériau transparent ou translucide.

2. Une enveloppe pour documents selon la revendication 1, formée à partir d'un matériau plastique, de préférence en polythène, en polypropylène ou en PVC.

3. Une enveloppe pour documents selon la revendication 2, dans laquelle les panneaux avant et arrière et la poche sont joints par soudage.

4. Une enveloppe pour documents selon n'importe laquelle des revendications précédentes, dans laquelle la surface de l'enveloppe inclut une impression, autre que dans la région de la poche.

5. Une ébauche pour former une enveloppe pour documents conformément à n'importe laquelle des revendications précédentes, l'ébauche comprenant un panneau avant, un panneau arrière, un rabat joint au panneau arrière et une extension au panneau avant destinée à la formation d'une poche et étant formée à partir d'un matériau transparent ou translucide.

6. Une méthode pour former une enveloppe pour documents comprenant les étapes de :
fournir une ébauche formée à partir d'un matériau transparent ou translucide comprenant un panneau avant, un panneau arrière, un rabat et une portion formant poche formée comme une extension au panneau avant ;
replier la portion d'extension formant poche et joindre celle-ci le long d'un bord pour former une poche ;
plier le panneau avant par rapport au panneau arrière, et les joindre l'un à l'autre le long d'une portion de bord pour former l'enveloppe.

7. Une méthode selon la revendication 6, dans laquelle la poche est située au niveau du bord de l'enveloppe, de telle sorte que l'étape consistant à joindre les panneaux avant et arrière joint aussi un bord de la poche.

8. Une méthode selon la revendication 6 ou la revendication 7, dans laquelle les joints sont formés par une soudure, un adhésif ou par couture.

9. Une méthode selon n'importe laquelle des revendications 6 à 8, dans laquelle l'ébauche inclut une impression autre que dans la zone de l'extension formant poche et la partie qui, dans l'enveloppe formée, recouvre la poche.
